# EUROPEAN PATENT SPECIFICATION

(11) **EP 4 437 852 B1**
(45) Date of publication and mention of the grant of the patent: **04.03.2026**
(21) Application number: 23305454.3
(22) Date of filing: 30.03.2023
(51) Int. Cl.: A21D 2/18, A21D 2/32, A21D 13/02, A21D 13/047

(54) **SOFT CAKE BAKERY PRODUCT AND A DOUGH FOR FORMING THE SAME**
WEICHE KUCHENBACKWARE UND TEIG ZUR FORMUNG DAVON
PRODUIT DE BOULANGERIE À GÂTEAU MOU ET PÂTE POUR LE FORMER

(43) Date of publication of application: 02.10.2024
(73) Proprietor: Generale Biscuit, 92140 Clamart (FR)
(72) Inventor: LANVIN, Lionel, 92140 Clamart (FR); FLATIN, Jean-Pierre, 92140 Clamart (FR)
(74) Representative: Boult Wade Tennant LLP

(56) References cited:
- US-A1- 2016 050 941
- US-A1- 2016 249 627
- US-A1- 2018 027 822
- ANONYMOUS: "Substituting whole grain flour for wheat flour: Impact on cake quality and glycemic index | SpringerLink", 7 September 2013 (2013-09-07), pages 1 - 9, XP093074888, Retrieved from the Internet <URL:https://link.springer.com/article/10.1007/s10068-013-0216-4> [retrieved on 20230818]
- ANONYMOUS: "The effects of xanthan gum and hydroxypropylmethylcellulose on physical properties of sponge cakes - ScienceDirect", 12 August 2018 (2018-08-12), pages 1 - 13, XP093074887, Retrieved from the Internet <URL:https://www.sciencedirect.com/science/article/pii/S1658077X18302145> [retrieved on 20230818]

## Description

The present invention relates to a soft cake bakery product which has a soft characteristic despite the inclusion of high levels of whole grain cereal and pseudocereal content. The invention also relates to a dough for forming the bakery product which, when baked, meets stringent nutritional guidelines, including high levels of wholegrain, while having a desirable soft cake texture.

There is a general desire among consumers to have healthier food products available. Consumers are becoming more aware of the health issues associated with products having high levels of fat and sugar. Similarly, there is an awareness that more refined products may be less healthy than those made with whole ingredients. In particular, wholegrain cereal products are known to have benefits for digestive health and there is a desire to provide products with large amounts of wholegrain cereal content. At the same time, there is a desire for bakery products having an excellent appearance and texture.

There is a particular desire for healthier versions of products which are generally seen as treats, such as cakes. These need to meet both the desired health profile and consumption characteristics (taste, appearance and texture). However, the use of ingredients such as wholegrain flour, or the provision of products with low levels of fat and/or sugar, is generally detrimental to meeting these consumption characteristics. That is baked goods with high or 100% whole grain content present a technical challenge for producing a soft-baked product, with high whole grain baked products typically having a dry and crumbly texture. The present invention relates to food products which achieve a soft, cohesive texture and are high in whole grain content.

US2016/249627 discloses methods and products related to a cereal product having a water activity of about 0.4 or more and an SAG content of greater than about 15 g per 100 g of cereal product.

Accordingly, it is an object of the present invention to provide a desirable soft cake having high levels of wholegrain suitable, or at least to tackle problems associated therewith in the prior art or provide a commercially viable alternative thereto.

According to a first aspect there is provided a soft cake bakery product which comprises grain material, wherein:
(i) a total content of grain material in the bakery product is at least 25wt%, based on the total weight of the bakery product;
(ii) the grain material contains whole wheat flour, the whole wheat flour being present in an amount of less than 20wt%, based on the total weight of the bakery product; and
(iii) at least 85wt% of the grain material is wholegrain grain material;
   and wherein the bakery product further comprises:
   (a) invert sugar in an amount of 2 to 5wt%; and
   (b) lecithin in an amount of 1 to 4wt%, and
   (c) xanthan gum in an amount of at least 0.1wt%, based on the total weight of the bakery product.

The present disclosure will now be described further. In the following passages different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous. It is intended that the features disclosed in relation to the product may be combined with those disclosed in relation to the method and vice versa.

As discussed above, high whole grain content has been associated with numerous health benefits, and food products with high whole grain content are desired by today's consumers. However, preparing products with a high whole grain content often presents technical challenges for the delivery of baked goods having soft, cohesive textures. Baked goods having grain material contents comprising a high level of whole grain are known to be dry and crumbly, lacking both the softness and cohesiveness desired by consumers. Composition of some embodiments of the present invention relate to novel approaches for providing baked food products that are soft and cohesive with high levels of whole grain content. As shown in the examples, the product provided demonstrable benefits through the use of a Texture analyser with the CRC method (Compression-Relaxation-Compression).

The present invention relates to a soft cake bakery product. A bakery products is one which is formed from the baking of a dough. The term soft cake as used herein extends to cakes, sweet breads, rolls, pastries, or other baked goods that have a developed matrix of air pockets. It is the provision of this open structure and the nature of the ingredients which leads to the desirable soft texture. The baked products described herein does not include cold-formed products, such as those that are agglomerated or granola bars, for example, nor products with a low water activity (Aw) such as biscuits and cookies.

When using wholegrain cereal or pseudocereal ingredients in a cake, the high amount of bran and fibres leads to dry and crumbly cake structures. In particular, wholegrain cereals, because of bran and germ fraction, have a higher water retention capacity. This leads to bad cake texture: too dry, and too crumbly. Nonetheless, wholegrain cereals have a number of beneficial health effects and it is desirable to provide a product with a high level of wholegrain cereal content.

There are a number of conventional approaches to mitigating this crumbly structure, but these have particular disadvantages for the healthy nutrition profile of the product. For example, it is possible to add an increased amount of fat since this enables a softer and melting texture. However, high levels of fat are not healthy.

Another approach is to increase the amount of sugar since an increase amount of sugar can result in a softer and more cohesive structure of cakes. However, high levels of sugar are not healthy.

The present inventors have found a solution to forming a soft cake with a high wholegrain content, without the need to provide undesirably high levels of fat or sugar.

In the present invention, the bakery product comprises grain material. Grain material is generally cereal or pseudocereal grain material and preferably consists of these materials. Examples of such grains include wheat, barley, rice, buckwheat, oats, chia, corn, sorghum, rye, millet, triticale, quinoa, amaranth, einkorn, farro, spelt, and teff. The grain material is present in a ground form, but the extent of grinding may vary from a fine flour (such as wheat flour) to a coarser material (such as buckwheat grits). Terms to describe these levels of grinding are well known in the art and the grain material can be provided as flour, groats, grits, and/or cuts.

For the avoidance of doubt, the grain material does not include isolated starch ingredients, including modified starch products. Isolated starch ingredients are a conventional bakery product and should be distinguished from flour ingredients, such as wheat flour, which comprise starch. Such ingredients are, in any event, not preferred. Preferably the baked product contains less than 5wt% isolated starch, more preferably less than 2wt% and preferably substantially no isolated starch ingredients.

A total content of grain material in the bakery product is at least 25wt%, based on the total weight of the bakery product. Preferably the grain material is present in an amount of from 25 to 40wt%, preferably 25 to 35 and most preferably 27 to 33wt%.

The grain material contains whole wheat flour. The whole wheat flour is present in an amount of less than 20wt%, based on the total weight of the bakery product. Preferably the wheat flour represents less than 16wt%, preferably from 10 to 15wt% of the bakery product. Whole grain sources, such as flour, may also be reconstituted from separate cereal/pseudocereal components made from endosperm, bran and germ respectively in ratios that give the reconstituted whole grain products the same composition as whole grain products directly produced from grains that still retain bran and germ. In contrast to a wholegrain flour, refined products, such as refined flour, are understood to mean grain products produced from cereal endosperm only.

At least 85wt% of the grain material is whole grain. Preferably at least 90wt%, more preferably at least 95wt% of the grain material is whole grain. Preferably substantially 100wt% of the grain material is whole grain. Providing a 100% wholegrain product is excellent from both a marketing and a nutritional point of view.

Preferably the grain material comprises one or more of whole rice flour, whole barley flour and buckwheat grits, and preferably comprises two thereof, most preferably all three thereof. The provision of these grain sources in a blend has been found to favour the provision of a soft structure, despite the fact that they are all wholegrain materials.

Preferably the grain material comprises at least 5wt%, preferably at least 10wt%, combined total of whole rice flour and buckwheat grits, based on the total weight of the dough. Preferably the combined total of whole rice flour and buckwheat grits is from 5 to 15wt% of the dough. Preferably these are present in a ratio of from 2:1 to 1:2 and preferably about 1:1.

The inventors have found that it is desirable to provide a range of different cereal types and functional ingredients and set an optimum ratio between each of them. Preferably the grain material comprises whole grain wheat flour, whole rice flour, whole barley flour and buckwheat grits. Preferably these are present in a ratio of about 3:1:1:1 respectively.

The bakery product further comprise invert sugar. Inverted sugar syrup, also called invert syrup, invert sugar, simple syrup, sugar syrup, sugar water, bar syrup, syrup USP, or sucrose inversion, is a syrup mixture of the monosaccharides glucose and fructose, that is made by hydrolytic saccharification of the disaccharide sucrose. The invert sugar is present in an amount of 2 to 5wt% (by dry weight). Preferably the invert sugar is present in an amount of at least 3wt%, based on the total weight of the bakery product, preferably 3 to 5wt%. Preferably the invert sugar is present in an amount of 3.5 to 4.5wt%.

Invert sugar is a known humectant that helps to retain product moisture and improve product texture. However, in general use it is known to cause an undesirable darkness in the product. This would be a particular concern when formulating a whole grain product since the presence of wholegrain itself already leads to a generally darker appearance. When preparing most biscuits and cookies a 1% addition of invert sugar usually leads to an overly darkened product. It also develops a "burnt" taste at higher levels. It was therefore surprisingly that addition levels of invert sugar into the wholegrain cake above 2wt% and especially over 3wt% was not overly dark and did not have a burnt taste. It was not until levels in excess of 5wt% that the product started to become dark and had a burnt taste.

Before using invert syrup, the inventors made products using a banana puree/fruit puree. The fruit puree did not yield a long enough shelf life and was extremely expensive. In contrast, use of invert sugar leads to a product which is shelf stable. The fruit puree formulation and the invert sugar sample yielded comparable taste results. Preferably the bakery product is free from fruit puree.

The bakery product further comprises lecithin. Lecithin is a generic term to designate any group of yellow-brownish fatty substances occurring in animal and plant tissues which are amphiphilic - they attract both water and fatty substances (and so are both hydrophilic and lipophilic), and are used for smoothing food textures, emulsifying, homogenizing liquid mixtures, and repelling sticking materials. Lecithins are mixtures of glycerophospholipids including phosphatidylcholine, phosphatidylethanolamine, phosphatidylinositol, phosphatidylserine, and phosphatidic acid. Lecithins can be obtained from a range of sources and a preferred source is soya lecithin. The lecithin is present in an amount of 1 to 4wt%, based on the total weight of the bakery product, preferably at least 2wt%, most preferably 2 to 3wt%.

While it is known to use lecithin as an ingredient in baked products, the typical levels of lecithin inclusion are much lower than those preferred in the dough described herein. In particular, typical inclusion levels never go above 1wt% and generally are at lower levels such as a maximum supplier recommendation of 0.3wt%. Above a level of 3wt% lecithin in the dough it is detrimental to the taste of the product and imparts an unpleasant mouth feeling ("warming").

The present inventors tried incrementally increased levels of lecithin addition and the products got progressively softer, until 3wt% when the taste/warming effect negatively impacted the product. The inventors noticed a highly significant difference in softness that continued with further addition, even with a difference between 1% and 2% being noticeable.

The bakery product further comprises xanthan gum in an amount of at least 0.1wt%, based on the total weight of the bakery product. Preferably the xanthan gum is present in an amount of from 0.1 to 0.3wt%, preferably 0.15 to 0.25wt%.

It is known that xanthan gum can be used to make cakes. It serves a particular use in holding inclusions in doughs. That is, it prevents inclusions from sinking to the bottom in the formulation. However, typical addition levels are very low. Xanthan gum typically imparts chewiness to a product, and it is generally known to have a negatively chewiness above 0.1wt% addition. In contrast, the present inventors have found that in the expanded crumb of the baked bakery good a higher level worked well to increase softness and reduce crumbliness. Indeed, surprisingly, the products were far from the overly chewy point. Without wishing to be bound by theory, it is considered that the whole grain cereal probably prevented the xanthan from creating an overly chewy network.

Preferably the bakery product has a moisture content of from 15 to 20wt%. The shelf-life of a product may be tied to its moisture content or water activity. Lower levels of water activity will lead to longer shelf-life periods without spoiling. However, ensuring a low level of water activity means that there is a limit to the amount of water which can be added. The present invention permits the provision of a product with good softness and shelf-life, without requiring significant water addition. This ensures that the water activity of the product is compatible with a long shelf life.

The present inventors have been able to provide a soft cake only made with wholegrain cereals, allowing a 100% whole grain claim, while keeping a high level of palatability, a good processing ability, a good nutritional profile, and lasting for at least 6-months. This can be achieved through portioning and baking the dough as described herein.

Preferably the bakery product has a water activity of 0.70 to 0.90, preferably 0.74 to 8.0, as measured one day after manufacture. Preferably the bakery product has a water activity of 0.75 to 0.9, as measured one day after manufacture. The water activity (Aw) of a product is a notion which is well known in the food industry field. This value measures the availability of water in a sample. In most cases, this water activity is not proportional to the water content of the product. Methods for measuring Aw of a product are known to the person skilled in the art. For example, it can be measured with an Aqualab CX-2 or series 3, or a Novasina. All Aw values indicated hereafter are measured at 25±0.1° C. The Aw is measured of the freshly produced and packaged product after 1 day. This is important to ensure full equilibration of the moisture in the product.

The bakery product may also include ingredients such as emulsifiers, buffering agents, leavening agents, seasoning, and preservatives. Suitable leavening agents may include but are not limited to ammonium bicarbonate, sodium bicarbonate, sodium acid pyrophosphate or mixtures thereof. Preferably the bakery product includes a combination of sodium bicarbonate and sodium acid pyrophosphate, which together act as a leavening agent.

Additional ingredients or additional components may include vitamins or minerals such as vitamin B1, B2, B3, B6, B12, iron, magnesium, calcium or mixtures thereof. The bakery product may also include salt, flavoring agents such as vanilla, cocoa powder, milk and dairy derivatives.

Preferably the bakery product does not include a coloring agent. Preferably the dough does not include artificial flavors. Preferably the bakery product does not include high-intensity sweeteners. By avoiding these ingredients it is possible to provide a product with an advantageous clean-label.

Preferably the bakery product does not have a filling. Nonetheless, the bakery product may be provided with inclusions, such as chocolate drops or raisins. An inclusion is a solid particulate, non-grain flavour or texture addition and will typically have a particle size in excess of a 2mm diameter. These inclusions are not counted towards the weight of the dough, such that the above-described weight percentages relate to the total weight of the dough, minus any solid inclusions.

Preferably the bakery product comprises, based on the total weight of the bakery product, 16wt% or less of fat, preferably 5 to 14wt% fat and preferably 10 to 12wt% fat. The ingredients, as discussed herein, permit the provision of a cake product with a soft texture without compromising a healthy nutrition profile.

Suitable fats include any suitable source, including but not limited to shortenings and oils, and both plant and animal sources. For example, fat may be derived from plant and vegetable oils, and/or from eggs or other animal fats (butter, etc.). The dough may comprises one or more of canola oil, high oleic canola oil, palm oil, soybean oil, sunflower oil, safflower oil, high oleic sunflower oil, cottonseed oil, transesterified oils or combinations of thereof.

Preferably the bakery product comprises, based on the total weight of the bakery product, 25wt% or less sugar. The ingredients of the dough, as discussed herein, permit the provision of a cake product with a soft texture without compromising a healthy nutrition profile. The sugar content, as referred to herein, includes conventional sweeteners, such as honey, sugar, (the invert sugar), glucose syrups, and both solid and liquid sweeteners.

Preferably the bakery product has a packaged shelf-life of at least 6 months, preferably at least 9 months. Preferably the bakery product has a packaged shelf-life of 6 to 12 months.

Preferably the bakery product in accordance with the invention may have a compression force of up to about 4,200 kgF when a height of the food product is compressed by 50%. In some embodiments, the food product has a compression force at 50% compression of less than about 4,200 kgF, about 4,200 kgF, about 4100 kgF, about 4000 kgF, or about 3900 kgF. In taking this measurement, Samples of baked products are placed between plates and compression is applied to the baked products with increasing weights until the samples were compressed to 50% of their original height. Such compression is believed to mimic the compression such a sample would receive during mastication, and the measured force exerted at 50% compression is a measurement of the softness of the baked product during chewing.

Additional components may also include optional toppings, such as, for example, a chocolate topping applied to a surface of a baked product of the invention. The topping does not contribute to the above proportions provided by weight of the bakery product. That is, in general the bakery product refers to the dough-based portion of the product per se.

According to a further aspect, there is provided a dough for forming the soft cake bakery product according to any of the preceding claims. Doughs are well known in the art and describe a thick, malleable mixture of flour and liquid, used for baking into bread or pastry. As described herein, the nature of the flour is critical to the invention and the liquid component will include oil, water and egg ingredients, as well as ingredients such as glycerine.

The dough comprises grain material, wherein:
(i) a total content of grain material in the bakery product is at least 25wt%, based on the total weight of the dough;
(ii) the grain material contains whole wheat flour, the whole wheat flour being present in an amount of less than 20wt%, based on the total weight of the dough; and
(iii) at least 85wt% of the grain material is wholegrain grain material;
   and wherein the dough further comprises, based on the total weight of the dough:
   (a) invert sugar in an amount of 2 to 4.5wt%; and
   (b) lecithin in an amount of 1 to 3.6wt%, and
   (c) xanthan gum in an amount of at least 0.1wt%, based on the total weight of the bakery product.

There is described herein a soft cake bakery product and a dough for forming such a bakery product. Both of these are defined based on their final composition. As will be appreciated, when formulating the dough it is possible to exactly specify the amounts of the ingredients and the ratios provided, and therefore its final composition. In a final baked product, these numbers can be determined through analysis of the product directly, though these numbers can also be determined by calculation, based on the expected water content of the components and the loss of water associated with the baking process. It should be noted that the moisture equilibrates between the ingredients of the baked product.

Accordingly, for the provided components which have a high moisture content, such as egg, the proportion of the ingredient decreases during baking due to the moisture loss. That is, egg represents a smaller proportion of the bakery product than it does the dough.

On the other hand, for dry ingredients such as sodium bicarbonate, a loss of about 10wt% moisture from the dough when baked to form the cake leads to the sodium bicarbonate representing about 10% more of the final product, by weight of the amount of sodium bicarbonate in the dough (e.g. 3% becoming 3.3%).

For semi-dry products such as flour (refined wheat flour would be typically 12-15wt% water), the baking process can lead to a small decrease in the proportion represented by this ingredient between the dough and the final product. It should be appreciated that the determination of the relative amounts of ingredients in a final product is conventional and critical for accurate reporting on the on-pack ingredient listing and nutritional information.

Rather than having distinct ranges for each ingredient in the bakery product and in the dough, the same numerical values have been used. It is appreciated that these do not define exactly the same ranges. That is, the dough includes a water component which is partially lost during the baking process. As a consequence of a loss of water, the amounts present of the other ingredients increase as a proportion of the whole. This has been taken into account to ensure that the intended scope of the invention is commensurate in the ranges claimed.

All lower limits based on the total weight of the bakery product would represent the broadest lower limits of the present invention. That is, the use of the same numbers to describe the lower limits present in the dough (as in this aspect above) represents a narrower subset of the invention. That is, a lower limit of 3wt% in the baked product would correspond to a lower limit of about 2.7wt% in the dough (given about 10% water loss). Thus, by reciting 3wt% for the dough a portion of the invention is no longer covered (i.e. 2.7-3wt%). Nonetheless, for simplicity, it has been elected to seek a narrower scope of protection for the dough and the same 3wt% lower limit would therefore be provided.

As regards upper limits, the converse would be true. In this instance the following upper limits should be considered to apply to the key components of the dough. Preferably the dough comprises, based on the total weight of the dough at most 4.5wt% invert sugar; and/or 3.6wt% lecithin. With the exception of the water/moisture contents, all other numerical disclosures of ranges in relation to the bakery product are considered to be corresponding disclosures of the same numerical ranges for the dough described herein.

We note that the amounts of each ingredient can be determined for a final product, albeit with reduced accuracy relative to the values known during product manufacture. Chemical techniques as well as microscopy can be conducted to determine the type and quantity of each ingredient, such as different originating sources of starches.

The baked products of the invention may be prepared according to any suitable method, such as those employed in traditional biscuit or cake preparation, while still maintaining a soft-texture and high whole grain content level in the finished product.

According to a further aspect there is provided a method for the manufacture of the soft cake bakery product as described herein, the method comprising providing a dough and baking it at a temperature below 180°C, preferably below 170°C and most preferably about 160°C. Preferably the dough is as described herein. The preferred method is described in more detail below. Preferably the baking process leads to a reduction in the moisture content of the dough equivalent to a reduction of from 5 to 15wt% of the total weight of the dough, preferably from 8 to 12wt% and most preferably about 10wt%.

Preferably the dough may be extruded and/or wire cut to provide a dough piece of a selected size and shape. With extrusion, the dough is directly shaped as a rope or slab and put on a plain baking belt and then cut into individual pieces before or after baking. In some embodiments, the rheology of the dough may be configured such that the dough may flow well through the wire cut. In some embodiments, the ingredients of the dough may be added during mixing such that the spread of a resulting dough piece may be controlled during baking. Alternatively, the dough can also be shaped with rotary molding technology, provided dough hydration or lay time are adapted. Dough pieces may also be formed by any other suitable method, including pan baking, wire cutting, sheeting and cutting with the reciprocal cutter.

The pieces may be transferred to the belt conveyer and further to the oven for baking. The formed dough pieces may then be baked to a desired moisture content. An oven temperature may range from about 120°C to about 250°C, or about 150°C to about 230 °C during baking. Various types of ovens can be adjusted to processing conditions required to produce a baked product of the invention. Preferably, the dough is baked at a temperature of from 155°C to 170°C, or 160°C to 165°C, preferably about 160°C.

The baked product may be cooled and then packaged.

The invention will now be described further in the following figures. In which:

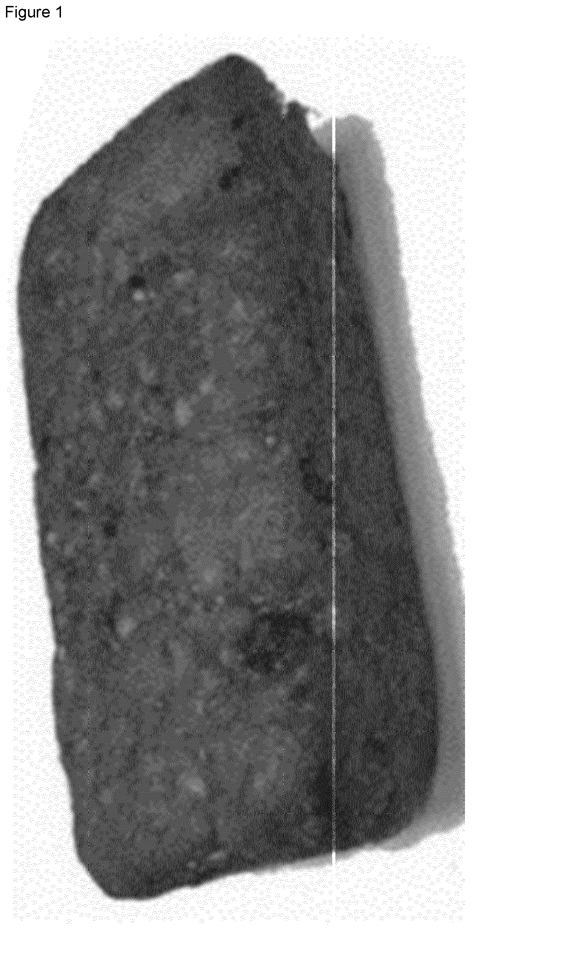

Figure 1 shows a soft cake made in accordance with the invention, with visible wholegrain pieces.
Figure 2 shows comparative softness measurements at 10% compression.
Figure 3 shows comparative softness measurements at 50% compression.

### Examples

The invention will now be described further in relation to the following non-limiting examples.

Three products were formulated as discussed below. HBC154 was a comparative example made with 100% whole wheat flour. HBC155 was a comparative example made with a range of whole grain flours but no invert syrup. HBC156 was prepared in accordance with the dough described herein.

In more detail, HBC 154 is 100% whole wheat flour cake with a conventional lecithin level. HBC 155 is 100% whole Grain cake made with a blend of whole wheat flour, whole Rice flour, whole barley flour and buckwheat grits, with standard lecithin level. HBC 156 is 100% whole Grain cake made with whole wheat, whole rice flour, whole barley flour, buckwheat grits, invert syrup, high level of lecithin, xanthan gum.

The doughs are summarised in the following table:

**Table 1: Dough formulation**

| All amounts approximate wt% | **HBC 154** | **HBC 155** | **HBC 156** |
|---|---|---|---|
| WATER | 2.75 | 2.75 | 1.86 |
| Whole Egg - Liquid | 22.40 | 22.40 | 22.15 |
| Humectant | 5.78 | 5.78 | 5.71 |
| Sugar, glucose syrup, polydextrose | 24.1 | 24.1 | 21.44 |
| Inverted sugar | 0.00 | 0.00 | 3.43 |
| Salt | 0.16 | 0.16 | 0.16 |
| Leavening agents + flavour | 0.81 | 0.81 | 0.81 |
| Whole Wheat flour | 29.83 | 19.33 | 14.24 |
| Xanthan gum | 0.00 | 0.00 | 0.17 |
| Whole Rice flour | 0.00 | 5.25 | 5.19 |
| Whole grain Barley | 0.00 | 0.00 | 5.19 |
| Grits buckwheat | 0.00 | 5.25 | 5.19 |
| Oil | 13.87 | 13.87 | 12.40 |
| Lecithin | 0.30 | 0.30 | 2.06 |
| *Formula Total** | 100.00 | 100.00 | 100.00 |

| | | | |
|---|---|---|---|
| • Due to rounding, the values shown here may not total 100* | | | |

**Table 2: Cake formulation**

| All amounts approximate wt% | **HBC 154** | **HBC 155** | **HBC 156** |
|---|---|---|---|
| WATER | 1.54 | 1.54 | 1.04 |
| Whole Egg - Liquid | 15.65 | 15.65 | 15.50 |
| Humectant | 6.69 | 6.69 | 6.60 |
| Sugar, glucose syrup, polydextrose | 26.31 | 26.31 | 23.24 |
| Inverted sugar | 0.00 | 0.00 | 3.40 |
| Salt | 0.19 | 0.19 | 0.19 |
| Leavening agents + flavour | 0.95 | 0.95 | 0.95 |
| Whole Wheat flour | 32.23 | 20.9 | 15.38 |
| Xanthan gum | 0.00 | 0.00 | 0.18 |
| Whole Rice flour | 0.00 | 5.64 | 5.57 |
| Whole grain Barley | 0.00 | 0.00 | 5.58 |
| Grits buckwheat | 0.00 | 5.69 | 5.62 |
| Oil | 16.09 | 16.09 | 14.37 |
| Lecithin | 0.35 | 0.35 | 2.38 |
| *Formula Total* | 100.00 | 100.00 | 100.00 |

| | | | |
|---|---|---|---|
| • Due to rounding, the values shown here may not total 100* | | | |

All of the doughs were subjected to a conventional baking profile in a static convection over at 175°C - 11 min. HBC155 and HBC156 were also tested at 160°C - 11 mins.

HBC154 required baking at 175°C for 11min. It stuck slightly to the mould (not a concern). HBC155 was impossible to demould at 160°C - 11min. it stuck to the mould at 175°C - 11min. HBC156 was able to be baked at either temperature with no moulding concerns.

| **Dough** | | | |
|---|---|---|---|
| Temperature (°C) | 21.3 | 21.3 | 21.1 |
| Moisture % | 26.38% | 26.70% | 26.01% |
| Aw 1 day | 0.8611 | 0.8607 | 0.8509 |

| **Cake after baking** | | | |
|---|---|---|---|
| Moisture % 1 week | 17.22% | 16.65% | 17.64% |
| Aw 1 week | 0.7522 | 0.7533 | 0.7606 |
| **Tasting @ 1 month (7 experts)** | Dry & crumbly | Softer than 154, and less crumbly | The softest of all, and the least crumbly |

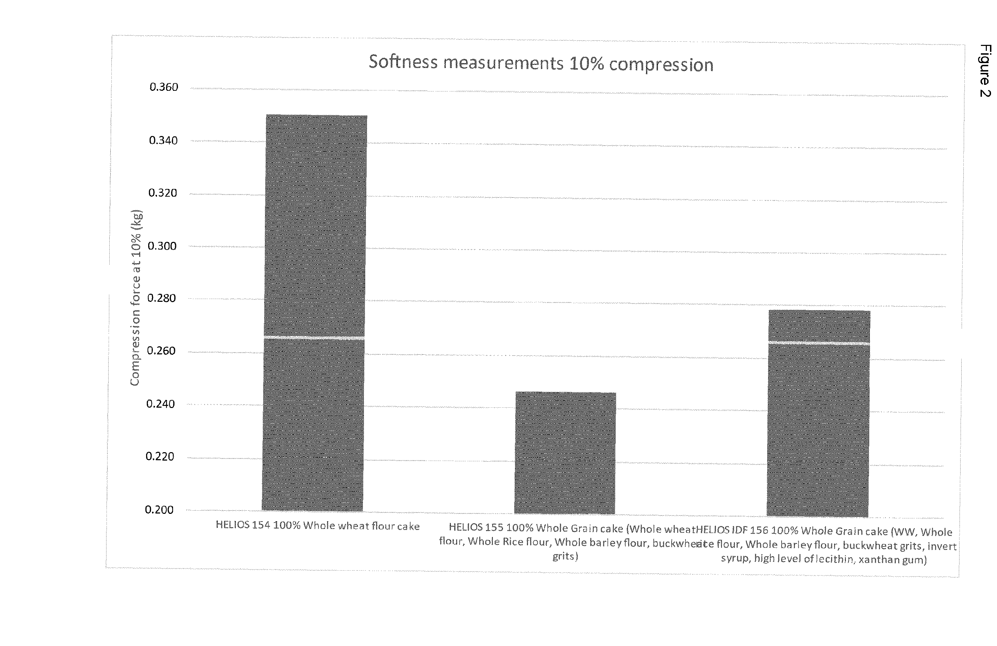

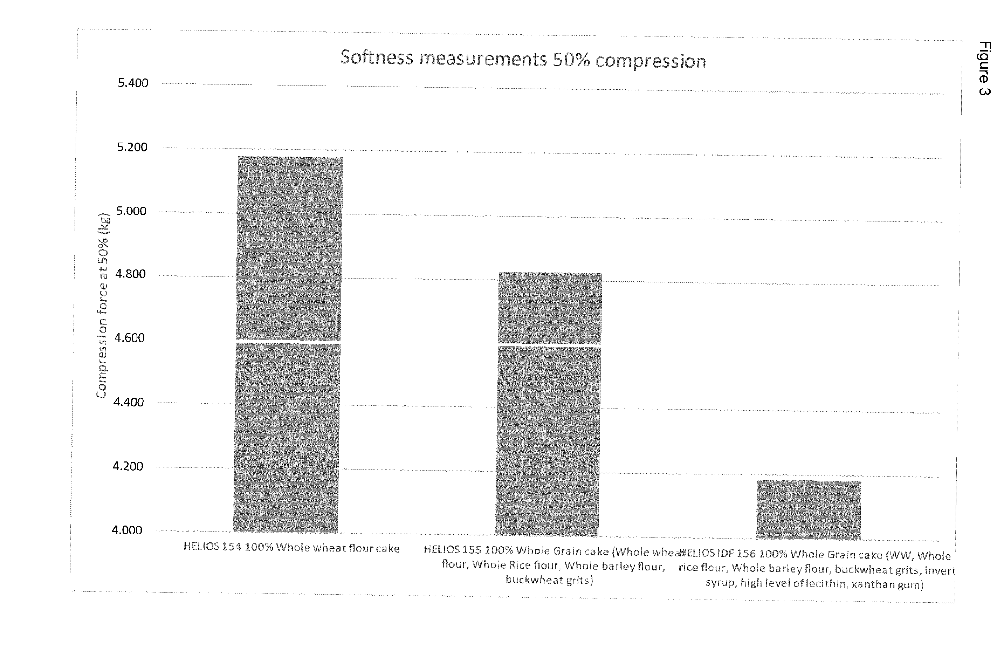

The softness of the final product was assessed, and the raw data is set out in the table below. This is shown in Figures 2 and 3.

| | Product height | F1=Force 10% 1ere compression | F2=Relaxation Force at 30s | Maximum force |
|---|---|---|---|---|
| | mm | kg | kg | kg |
| HBC154 | | | | |
| 154 175C - 01 | 14.514 | 0.451 | 0.173 | 5.590 |
| 154 175C - 02 | 14.136 | 0.300 | 0.113 | 5.043 |
| 154 175C - 03 | 13.726 | 0.406 | 0.155 | 5.984 |
| 154 175C - 04 | 15.396 | 0.322 | 0.111 | 4.818 |
| 154 175C - 05 | 14.574 | 0.275 | 0.100 | 4.453 |
| **AVERAGE** | **14.469** | **0.351** | **0.130** | **5.178** |

| HBC155 | | | | |
|---|---|---|---|---|
| 155 175C - 01 | 13.938 | 0.309 | 0.124 | 4.840 |
| 155 175C - 02 | 14.126 | 0.239 | 0.097 | 4.534 |
| 155 175C - 03 | 14.468 | 0.163 | 0.063 | 4.233 |
| 155 175C - 04 | 13.742 | 0.249 | 0.096 | 5.243 |
| 155 175C - 05 | 13.959 | 0.271 | 0.105 | 5.283 |
| **AVERAGE** | **14.047** | **0.246** | **0.097** | **4.827** |

| HBC156 | | | | |
|---|---|---|---|---|
| 156 175C - 01 | 14.218 | 0.178 | 0.069 | 3.500 |
| 156 175C - 02 | 14.062 | 0.223 | 0.084 | 3.869 |
| 156 175C - 03 | 13.624 | 0.296 | 0.110 | 4.216 |
| 156 175C - 04 | 13.679 | 0.300 | 0.113 | 4.522 |
| 156 175C - 05 | 13.277 | 0.396 | 0.151 | 4.817 |
| **AVERAGE** | **13.772** | **0.278** | **0.105** | **4.185** |

The term "comprising" as used herein can be exchanged for the definitions "consisting essentially of" or "consisting of" The term "comprising" is intended to mean that the named elements are essential, but other elements may be added and still form a construct within the scope of the claim. The term "consisting essentially of" limits the scope of a claim to the specified materials or steps and those that do not materially affect the basic and novel characteristic(s) of the claimed invention. The term "consisting of" closes the claim to the inclusion of materials other than those recited except for impurities ordinarily associated therewith.

The foregoing detailed description has been provided by way of explanation and illustration and is not intended to limit the scope of the appended claims. Many variations in the presently preferred embodiments illustrated herein will be apparent to one of ordinary skill in the art and remain within the scope of the appended claims and their equivalents.

For the avoidance of doubt, the entire contents of all documents acknowledged herein are incorporated herein by reference.

## Claims

1. A soft cake bakery product which comprises grain material, wherein:
(i) a total content of grain material in the bakery product is at least 25wt%, based on the total weight of the bakery product;
(ii) the grain material contains whole wheat flour, the whole wheat flour being present in an amount of less than 20wt%, based on the total weight of the bakery product; and
(iii) at least 85wt% of the grain material is wholegrain grain material;
and wherein the bakery product further comprises:
(a) invert sugar in an amount of 2 to 5wt%;
(b) lecithin in an amount of 1 to 4wt%, and
(c) xanthan gum in an amount of at least 0.1wt%, based on the total weight of the bakery product.

2. The bakery product according to claim 1, wherein the grain material further comprises one or more of whole rice flour, whole barley flour and buckwheat grits, and preferably comprises two thereof, most preferably all three thereof.

3. The bakery product according to claim 1 or claim 2, wherein the grain material comprises at least 5wt%, preferably at least 10wt%, combined total of whole rice flour and buckwheat grits, based on the total weight of the bakery product.

4. The bakery product according to any preceding claim, wherein the invert sugar is present in an amount of 3 to 5wt%, based on the total weight of the bakery product.

5. The bakery product according to any preceding claim, wherein the lecithin is present in an amount of at least 1.5wt%, based on the total weight of the bakery product.

6. The bakery product according to any preceding claim, wherein the bakery product has a moisture content of from 15 to 20wt%.

7. The bakery product according to any preceding claim, wherein the total content of grain material is at least 30wt%, based on the total weight of the bakery product.

8. The bakery product according to any preceding claim, wherein the bakery product has a water activity of 0.70 to 0.80, as measured one day after manufacture.

9. The bakery product according to any preceding claim, wherein the bakery product comprises, based on the total weight of the bakery product:
(a) 16wt% or less of fat; and/or
(b) 25wt% or less sugar.

10. The bakery product according to any preceding claim, wherein the bakery product is packaged and has a packaged shelf-life of at least 6 months.

11. A dough for forming the soft cake bakery product according to any of the preceding claims, the dough comprising grain material, wherein:
(i) a total content of grain material in the bakery product is at least 25wt%, based on the total weight of the dough;
(ii) the grain material contains whole wheat flour, the whole wheat flour being present in an amount of less than 20wt%, based on the total weight of the dough; and
(iii) at least 85wt% of the grain material is wholegrain grain material;
and wherein the dough further comprises, based on the total weight of the dough:
(a) invert sugar in an amount of 2 to 4.5wt%;
(b) lecithin in an amount of 1 to 3.6wt%, and
(c) xanthan gum in an amount of at least 0.1wt%, based on the total weight of the bakery product.

12. A method for the manufacture of the soft cake bakery product according to any of claims 1 to 10, the method comprising providing a dough and baking it at a temperature below 180°C, preferably below 170°C and most preferably about 160°C.

13. The method according to claim 12, wherein the dough is according to claim 11.

## Patentansprüche

1. Weiche Kuchenbackware, umfassend Kornmaterial, wobei:
(i) ein Gesamtgehalt an Kornmaterial in der Backware mindestens 25 Gew.-% beträgt, bezogen auf das Gesamtgewicht der Backware;
(ii) das Kornmaterial Vollkornweizenmehl enthält, wobei das Vollkornweizenmehl in einer Menge von weniger als 20 Gew.-%, bezogen auf das Gesamtgewicht der Backware, vorhanden ist; und
(iii) mindestens 85 Gew.-% des Kornmaterials Vollkorn-Kornmaterial ist;
und wobei die Backware ferner umfasst:
(a) Invertzucker in einer Menge von 2 bis 5 Gew.-%;
(b) Lecithin in einer Menge von 1 bis 4 Gew.-%, und
(c) Xanthan in einer Menge von mindestens 0,1 Gew.-%, bezogen auf das Gesamtgewicht der Backware.

2. Backware nach Anspruch 1, wobei das Kornmaterial ferner eines oder mehrere von Vollreismehl, Vollgerstenmehl und Buchweizengrütze umfasst, und vorzugsweise zwei davon umfasst, am meisten bevorzugt alle drei davon.

3. Backware nach Anspruch 1 oder Anspruch 2, wobei das Kornmaterial mindestens 5 Gew.-%, vorzugsweise mindestens 10 Gew.-%, kombiniertes Gesamtgewicht von Vollreismehl und Buchweizengrütze, bezogen auf das Gesamtgewicht der Backware, umfasst.

4. Backware nach einem der vorstehenden Ansprüche, wobei der Invertzucker in einer Menge von 3 bis 5 Gew.-%, bezogen auf das Gesamtgewicht der Backware, vorhanden ist.

5. Backware nach einem der vorstehenden Ansprüche, wobei das Lecithin in einer Menge von mindestens 1,5 Gew.-%, bezogen auf das Gesamtgewicht der Backware, vorhanden ist.

6. Backware nach einem der vorstehenden Ansprüche, wobei die Backware einen Feuchtigkeitsgehalt von 15 bis 20 Gew.-% aufweist.

7. Backware nach einem der vorstehenden Ansprüche, wobei der Gesamtgehalt an Kornmaterial, bezogen auf das Gesamtgewicht der Backware, mindestens 30 Gew.-% beträgt.

8. Backware nach einem der vorstehenden Ansprüche, wobei die Backware eine Wasseraktivität von 0,70 bis 0,80 aufweist, gemessen einen Tag nach der Herstellung.

9. Backware nach einem der vorstehenden Ansprüche, wobei die Backware, bezogen auf das Gesamtgewicht der Backware, Folgendes umfasst:
(a) 16 Gew.-% oder weniger Fett; und/oder
(b) 25 Gew.-% oder weniger Zucker.

10. Backware nach einem der vorstehenden Ansprüche, wobei die Backware verpackt ist und eine verpackte Haltbarkeit von mindestens 6 Monaten aufweist.

11. Teig zum Bilden der weichen Kuchenbackware nach einem der vorstehenden Ansprüche, wobei der Teig Kornmaterial umfasst, wobei:
(i) ein Gesamtgehalt an Kornmaterial in der Backware mindestens 25 Gew.-% beträgt, bezogen auf das Gesamtgewicht des Teigs;
(ii) das Kornmaterial Vollkornweizenmehl enthält, wobei das Vollkornweizenmehl in einer Menge von weniger als 20 Gew.-%, bezogen auf das Gesamtgewicht des Teigs, vorhanden ist; und
(iii) mindestens 85 Gew.-% des Kornmaterials Vollkorn-Kornmaterial ist;
und wobei der Teig ferner umfasst, bezogen auf das Gesamtgewicht des Teigs:
(a) Invertzucker in einer Menge von 2 bis 4,5 Gew.-%;
(b) Lecithin in einer Menge von 1 bis 3,6 Gew.-%, und
(c) Xanthan in einer Menge von mindestens 0,1 Gew.-%, bezogen auf das Gesamtgewicht der Backware.

12. Verfahren zur Herstellung der weichen Kuchenbackware nach einem der Ansprüche 1 bis 10, wobei das Verfahren das Bereitstellen eines Teigs und das Backen desselben bei einer Temperatur unter 180 °C, vorzugsweise unter 170 °C und am meisten bevorzugt etwa 160 °C umfasst.

13. Verfahren nach Anspruch 12, wobei der Teig nach Anspruch 11 ist.

## Revendications

1. Produit de boulangerie de type gâteau moelleux qui comprend une matière céréalière, dans lequel :
(i) une teneur totale en matière céréalière dans le produit de boulangerie est d'au moins 25 % en poids, en fonction du poids total du produit de boulangerie ;
(ii) la matière céréalière contient de la farine de blé entier, la farine de blé entier étant présente en une quantité inférieure à 20 % en poids, en fonction du poids total du produit de boulangerie ; et
(iii) au moins 85 % en poids de la matière céréalière est une matière céréalière complète ;
et dans lequel le produit de boulangerie comprend en outre :
(a) du sucre inverti en une quantité de 2 à 5 % en poids ;
(b) de la lécithine en une quantité de 1 à 4 % en poids, et
(c) de la gomme de xanthane en une quantité d'au moins 0,1 % en poids, en fonction du poids total du produit de boulangerie.

2. Produit de boulangerie selon la revendication 1, dans lequel la matière céréalière comprend en outre un ou plusieurs parmi de la farine de riz complet, de la farine d'orge complet et du gruau de sarrasin, et comprend de préférence deux de ceux-ci, le plus préférablement tous les trois.

3. Produit de boulangerie selon la revendication 1 ou la revendication 2, dans lequel la matière céréalière comprend au moins 5 % en poids, de préférence au moins 10 % en poids, total combiné de farine de riz entier et de gruau de sarrasin, en fonction du poids total du produit de boulangerie.

4. Produit de boulangerie selon l'une quelconque revendication précédente, dans lequel le sucre inverti est présent en une quantité de 3 à 5 % en poids, en fonction du poids total du produit de boulangerie.

5. Produit de boulangerie selon l'une quelconque revendication précédente, dans lequel la lécithine est présente en une quantité d'au moins 1,5 % en poids, en fonction du poids total du produit de boulangerie.

6. Produit de boulangerie selon l'une quelconque revendication précédente, dans lequel le produit de boulangerie a une teneur en humidité allant de 15 à 20 % en poids.

7. Produit de boulangerie selon l'une quelconque revendication précédente, dans lequel la teneur totale en matière céréalière est d'au moins 30 % en poids, en fonction du poids total du produit de boulangerie.

8. Produit de boulangerie selon l'une quelconque revendication précédente, dans lequel le produit de boulangerie a une activité de l'eau de 0,70 à 0,80, telle que mesurée un jour après la fabrication.

9. Produit de boulangerie selon l'une quelconque revendication précédente, dans lequel le produit de boulangerie comprend, en fonction du poids total du produit de boulangerie :
(a) 16 % en poids ou moins de matières grasses ; et/ou
(b) 25 % en poids ou moins de sucre.

10. Produit de boulangerie selon l'une quelconque revendication précédente, dans lequel le produit de boulangerie est emballé et a une durée de conservation emballée d'au moins 6 mois.

11. Pâte permettant de former le produit de boulangerie de type gâteau moelleux selon l'une quelconque des revendications précédentes, la pâte comprenant une matière céréalière, dans laquelle :
(i) une teneur totale en matière céréalière dans le produit de boulangerie est d'au moins 25 % en poids, en fonction du poids total de la pâte ;
(ii) la matière céréalière contient de la farine de blé entier, la farine de blé entier étant présente en une quantité inférieure à 20 % en poids, en fonction du poids total de la pâte ; et
(iii) au moins 85 % en poids de la matière céréalière est une matière céréalière complète ;
et dans lequel la pâte comprend en outre, en fonction du poids total de la pâte :
(a) du sucre inverti en une quantité de 2 à 4,5 % en poids ;
(b) de la lécithine en une quantité de 1 à 3,6 % en poids, et
(c) de la gomme de xanthane en une quantité d'au moins 0,1 % en poids, en fonction du poids total du produit de boulangerie.

12. Procédé de fabrication du produit de boulangerie de type gâteau moelleux selon l'une quelconque des revendications 1 à 10, le procédé comprenant la fourniture d'une pâte et sa cuisson à une température inférieure à 180 °C, de préférence inférieure à 170 °C et le plus préférablement autour de 160 °C.

13. Procédé selon la revendication 12, dans lequel la pâte est selon la revendication **11.**
